# EUROPEAN PATENT APPLICATION

(11) **EP 4 596 201 A1**
(43) Date of publication of application: **06.08.2025**
(21) Application number: 23871739.1
(22) Date of filing: 01.09.2023
(51) Int. Cl.: B29B 9/06, B29B 9/14, C08K 7/14, C08L 77/00, C08J 5/04, B29B 7/48, C08K 3/013

(54) **PRODUCTION METHOD FOR GLASS FIBER-REINFORCED POLYAMIDE RESIN COMPOSITION**

(30) Priority: 27.09.2022 JP 2022153349; 27.09.2022 JP 2022153350
(71) Applicant: GLOBAL POLYACETAL CO., LTD., Tokyo 105-0021 (JP)
(72) Inventor: TAJIRI, Toshiyuki, Hiratsuka-shi, Kanagawa 254-0016 (JP); KATO, Tomonori, Hiratsuka-shi, Kanagawa 254-0016 (JP)
(74) Representative: Müller-Boré & Partner Patentanwälte PartG mbB
(86) International application number: PCT/JP2023/032074
(87) International publication number: WO 2024/070499

(57) **Abstract**

A method for producing a glass fiber-reinforced polyamide resin composition by using a twin screw extruder is provided, the resin composition containing 20 to 70 mass% of a polyamide resin (A) and 10 to 75 mass% of glass fibers (B) wherein the shear viscosity of the glass fiber-reinforced polyamide resin composition at a temperature of 280°C and a shear rate of 91 /sec is 400 to 2000 Pa·s, when a strand is extruded from a horizontal flat die provided in a die holder at the front end of the twin screw extruder, the temperature of the strand from a die hole in the center of the flat die is 310°C to 360°C, and
(i) the temperature of the strand from a die hole at an end of the flat die is lower than the temperature of the strand from the die hole in the center of the flat die by 4°C to 14°C, or
(ii) the strand is extruded such that the resin pressure in the die when the strand is extruded from the flat die reaches 2.0 to 8.5 MPa.

## Description

### Technical Field

The present invention relates to a production method for a glass fiber-reinforced polyamide resin composition, and relates to, in detail, a method in which a glass fiber-reinforced polyamide resin composition, into which a high concentration of glass fiber or another reinforcement material has been blended, is produced as pellets maintaining a favorable pellet shape with high productivity by using a twin screw extruder while strand breaks are suppressed and continuous and stable production is enabled.

### Background Art

A polyamide resin represented by poly-m-xylyleneadipamide (hereinafter, also referred to as nylon MXD6), polyamide 6 (also referred to as nylon 6), polyamide 66 (also referred to as nylon 66), or the like is in wide use in a variety of machine parts, automobile parts, and the like, mainly for injection molding. Particularly, glass fiber-reinforced polyamide resin compositions into which a high content of glass fiber have been blended are excellent in terms of mechanical strength, heat resistance, chemical resistance, and the like and are in use as parts in the automotive industry, the mechanical equipment field, and the like.

Patent Literature 1 describes (1) a glass fiber-reinforced polyamide resin composition containing a polyamide resin (A) composed of an aliphatic polyamide (a1) and a polyamide (a2) containing an aromatic component and glass fiber (B) having a cross-sectional area of 1.5 to 5.0 × 10⁻⁶ cm², in which a weight ratio (A): (B) between the polyamide resin (A) and the glass fiber (B) is 20:80 to 35:65.

However, in the production of a polyamide resin composition, into which glass fiber or another reinforcement material has been blended at a high concentration, with a twin screw extruder, strand breaks are likely to occur when the composition is extruded from a die. When strands break, the broken strands come into contact with adjacent strands, and the adjacent strands may also break. In addition, an operation of feeding the broken strands into a pelletizer again or an operation of rectifying the strands needs to be performed, thus the productivity significantly deteriorates. In addition, when the broken strands are fed into the pelletizer, the strands overlap one another, the flow of the strands is disturbed, hence long pellets are likely to be generated. In addition, strand breaks also become poor due to the high concentration, cross sections of pellets are not sharp, and a large number of chips are also generated. This tendency becomes more significant as the concentration of the glass fiber or the other reinforcement material becomes higher. Long pellets or chips are likely to cause poor plasticization upon molding with an injection molding machine and make measurement time long, make the injection molding machine stop, or make the productivity deteriorate. Particularly, when the content of the glass fiber and the other reinforcement material exceeds 30 mass%, this phenomenon becomes significant, and this phenomenon becomes more significant when the content exceeds 40 mass% and becomes particularly significant when the content exceeds 50 mass%.

### Citation List

### Patent Literature

PTL 1: WO 2014/171363

### Summary of Invention

### Technical Problem

An object (purpose) of the present invention is to suppress the breaks of strands extruded from a die, enable continuous and stable production, and suppress generation of long pellets at the time of producing a glass fiber-reinforced polyamide resin composition, into which glass fiber and another reinforcement material, has been blended at a high concentration with a twin screw extruder.

### Solution to Problem

As a result of intensive studies for achieving the above-described object, the present inventors have found that in a case of producing a polyamide resin composition containing glass fiber and another reinforcement material in high contents of 10 to 75 mass% and 0 to 40 mass%, respectively, with a twin screw extruder, viscosity of the resin composition becomes a high viscosity; however, when the viscosity is made into a shear viscosity (280°C, shear rate of 91 /sec) of 400 to 2000 Pa·s, strand temperatures are made to be a specific temperature, and (i) the temperature of a strand at the die end is made to be lower than the temperature of the strand at the die center by 4°C to 14°C or (ii) a die pressure is made to be within a specific range, whereby strand breaks are suppressed, continuous and stable production is enabled, and the generation of long pellets can be significantly suppressed, and arrived at the present invention.

In addition, the present inventors have found that, at that time, the temperature of a die holder is preferably set to a high temperature of 250°C to 350°C, and the resin pressure in the die is preferably set to 2.0 to 8.5 MPa.

The present invention relates to a production method for a glass fiber-reinforced polyamide resin composition below.
1. A production method for a glass fiber-reinforced polyamide resin composition comprising 20 to 70 mass% of a polyamide resin (A), 10 to 75 mass% of a glass fiber (B), 0 to 40 mass% of another reinforcement material (C), and 0 to 30 mass% of another polymer or additive (D) (the total of each components is 100 mass%), by using a twin screw extruder, wher ein
   a shear viscosity of the glass fiber-reinforced polyamide resin composition at a temperature of 280°C and a shear rate of 91 /sec is 400 to 2000 Pa·s,
   when a strand is extruded from a horizontal flat die provided in a die holder at a front end of the twin screw extruder, a temperature of the strand from a die hole in a center of the flat die is 310°C to 360°C, and
      (i) a temperature of the strand from a die hole at an end of the flat die is 4°C to 14°C lower than the temperature of the strand from the die hole in the center of the flat die, or
      (ii) the strand is extruded such that a resin pressure in the die when the strand is extruded from the flat die is 2.0 to 8.5 MPa.
2. The production method of the 1, wherein (i) the temperature of the strand from the die hole at the end of the flat die is 4°C to 14°C lower than the temperature of the strand from the die hole in the center of the flat die , and (ii) the strand is extruded such that the resin pressure in the die when the strand is extruded from the flat die is 2.0 to 8.5 MPa.
3. The production method of the 1 or 2, wherein a temperature of the die holder is 250°C to 350°C.
4. The production method of any one of the 1 to 3, wherein the polyamide resin (A) comprises one to three among poly-m-xylyleneadipamide, polyamide 6, and polyamide 66.
5. The production method of any one of the 1 to 4, wherein a total of contents of the glass fiber (B) and the other reinforcement material (C) is 30 mass% or more.
6. The production method of any one of the 1 to 5, wherein the glass fiber (B) comprises glass fiber having an aspect ratio of a longitudinal cross section within a range of 2.0 to 6.0. Advantageous Effects of Invention

According to the production method of the present invention, a glass fiber-reinforced polyamide resin composition (pellet) containing glass fiber or another reinforcement material at a high concentration can be produced in a favorable pellet shape while strand breaks are suppressed and continuous and stable production is enabled.

### Brief Description of Drawings

[Fig. 1]

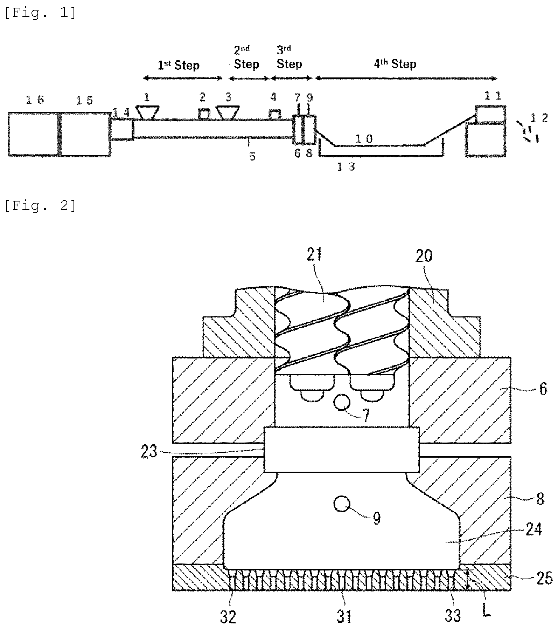

   Fig. 1 is a conceptual view showing an example of a step from a twin screw extruder that is used in the present invention through a pelletizer.
[Fig. 2]
   Fig. 2 is a view showing an example of a die portion of the twin screw extruder that is used in the present invention.
[Fig. 3]

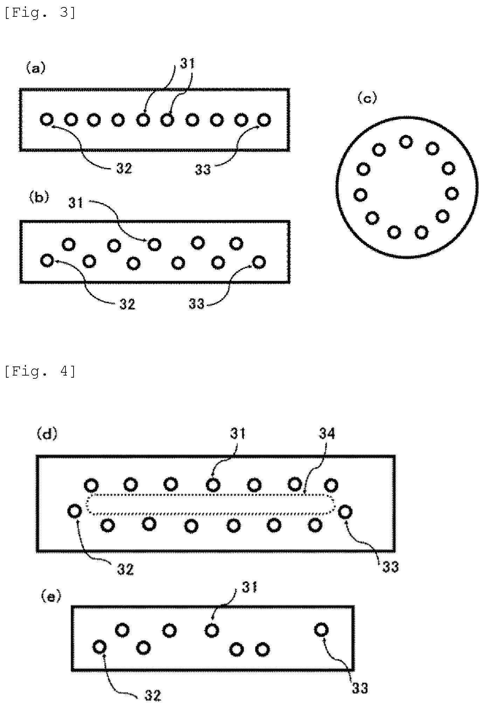

   Fig. 3 is a cross-sectional view showing examples of a horizontal flat die and the like that is used in the present.
[Fig. 4]
   Fig. 4 is a cross-sectional view showing another example of the horizontal flat die that is used in the present invention.
[Fig. 5]

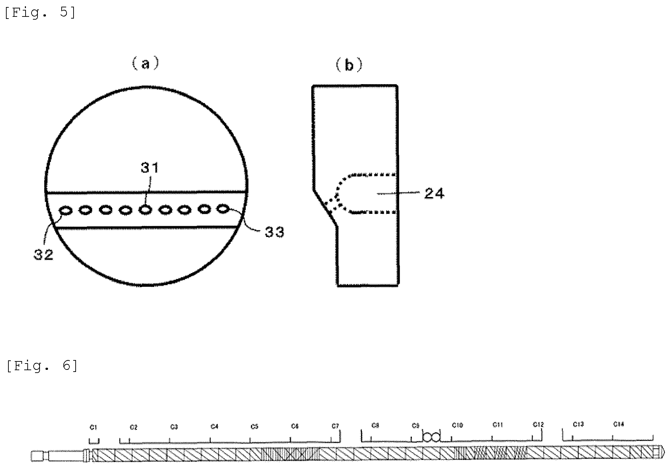

   Fig. 5 is a cross-sectional view showing still another example of the horizontal flat die that is used in the present invention.
[Fig. 6]
   Fig. 6 is a conceptual view of the configuration of a screw of an extruder used in examples or comparative examples.

### Description of Embodiments

Hereinafter, the present invention will be described in detail by showing an embodiment, an example, and the like, but the present invention is not limited to the embodiment, the example, and the like to be described below and can be arbitrarily modified and carried out within the scope of the gist of the present invention. In the present specification, "to" is used to mean that numerical values before and after "to" are included as the lower limit value and the upper limit value.

In a production method of the present invention, a glass fiber-reinforced polyamide resin composition composed of 20 to 70 mass% of a polyamide resin (A), 10 to 75 mass% of glass fiber (B), 0 to 40 mass% of another reinforcement material (C), and 0 to 30 mass% of another polymer or additive (D) (the total of the each components is 100 mass%) is produced with a twin screw extruder.

The extruder that is used in the present invention is a vented twin screw extruder and is preferably an intermeshing co-rotating twin screw extruder in which two screws rotating in the same direction are provided in a barrel and kneading portions each composed of a plurality of kneading discs are provided in an intermeshing manner in the middle of the screws.

As shown in Fig. 1, the vented twin screw extruder has a cylinder including a main raw material hopper 1, an open vent 2, a side feed hopper 3, a vacuum vent 4, and a die holder 8 at a front end through a flange 6. The screws in the cylinder are driven by a motor 16 through a screw connection portion 14 and a gear box 15 and rotated.

The polyamide resin (A) and the other polymer or additive (D) are fed from the main raw material hopper 1 and kneaded in a first kneading portion (first step). The glass fiber (B) are normally side-fed from the side feed hopper 3 that is present at the downstream portion of the first kneading portion and kneaded in a second kneading portion (second step). The other reinforcement material (C) may be fed from the hopper 1 or may be fed from the side feed hopper 3 like the glass fiber (B). The other reinforcement material may also be fed from a separate place.

Next, at the downstream portion of the second kneading portion, the vacuum vent 4 is decompressed to cause devolatilization and the pressure is increased, and a strand is extruded from a die provided at the die holder 8 (third step). Then, a strand 10 extruded from the die is cooled with water, cut with a pelletizer 11 (fourth step), and pellets 12 of the resin composition are obtained.

In the first step, the polyamide resin (A) and the other polymer or additive (D) are fed from the main raw material hopper 1 into the extruder and heated and kneaded with the screws to be melted. The first kneading portion composed of a plurality of kneading discs is configured in the middle of the screws. The first kneading portion is a kneading portion where the polyamide resin (A) and the other polymer or additive (D) are fed and then kneaded, and means a kneading portion before the glass fiber (B) is fed. The screw configuration is preferably configured by combining two or more of an R kneading disc, an N kneading disc, an L kneading disc, an L screw, a seal ring, a mixing screw, or a rotor screw, and the length is preferably set to 4.0 to 9.0D (D is the cylinder diameter). The first kneading portion is a kneading portion where the polyamide resin (A) and the other polymer or additive (D) are fed and then kneaded and is a kneading portion before the glass fiber (B) is fed.

This first kneading portion may be a single combined section or divided into a plurality of sections. That is, the first kneading portion may be divided, and a conveying screw may be interposed therebetween. Even in a case where the first kneading portion is divided, the total length of the kneading portion is preferably set within a range of 4.0 to 9.0D.

The R kneading disc (hereinafter, also referred to as R in some cases) is a forward conveying kneading disc element and normally has two or more blades, and the blade twist angle θ is preferably 10 degrees to 75 degrees. When the blades are installed at a predetermined angle as described above, a zone in which a pseudo screw structure is formed, a strong shear force is applied to the resin while the resin is conveyed in the conveying direction, and the resin is kneaded is formed.

The L kneading disc (hereinafter, also referred to as L in some cases) is a reverse conveying kneading disc element and normally has two or more blades, and the blade twist angle θ is preferably -10 degrees to -75 degrees. A reverse conveying kneading disc element is an element with a compression capability to block the incoming resin or send resin back and is an element that is provided downstream of an element that promotes kneading to hold the resin back and make a strong kneading effect be exhibited.

The N kneading disc (hereinafter, also referred to as N in some cases) is an orthogonal kneading disc element and normally has two or more blades, and the blade twist angle θ is 75 degrees to 105 degrees. Since the blades are installed at substantially 90 degrees, the resin-conveying force is weak, but the kneading power is strong.

The L screw is a reverse conveying screw, the seal ring is a ring that restricts the flow of an upstream portion with each gap in a seal ring portion, the mixing screw is a screw element in which the screw thread (flight portion) has been cut out, and the rotor screw is a screw element in which one thread or a plurality of threads are provided on the outer peripheral surface.

Among these, the R kneading disc, the N kneading disc, and the L kneading disc are preferable, and a combined configuration of a plurality thereof is preferable.

Regarding the screw configuration in the first kneading portion in the first step, it is preferable that an element that promotes kneading is disposed upstream and an element with a compression capability is disposed downstream. Therefore, in the first kneading portion, it is preferable that two or more selected from R, N, and L are disposed in the order of R, N, and L from the upstream side, and the number of each of R, N, and L disposed is also preferable plural. Particularly, a configuration in which R is disposed upstream and a plurality of N's and then L are disposed is preferable.

When the cylinder diameter is represented by D, the screw length in the first kneading portion is preferably set within 4.0 to 9.0D, and when the screw length is set as described above, the polyamide resin (A) is sufficiently melted and plasticized, and it is also possible to suppress the occurrence of the decomposition of the resin composition. When the screw length in the first kneading portion is shorter than 4.0D, the resin is likely to be insufficiently melted and plasticized due to insufficient shearing. When the screw length exceeds 9.0D, there is a tendency that the resin composition is locally decomposed due to excess kneading, and the mechanical properties of the resin composition are likely to be poor.

After the kneading and melting of the polyamide resin (A) in the first step, it is preferably vented by the open vent 2. A seal ring is preferably provided downstream of the open vent 2.

In the second step, after the above-described first step, the glass fiber (B) is side-fed from the side feed hopper 3, which is present at the downstream portion of the first kneading portion, and the glass fiber (B) and the molten polyamide resin (A) are kneaded together in the second kneading portion.

The second kneading portion means a kneading portion where the glass fiber (B) is fed, spread, and kneaded. The screw configuration in the second kneading portion is preferably a configuration in which one or two or more of an R kneading disc, an N kneading disc, an L kneading disc, an L screw, a seal ring, and a mixing screw are combined together, and when kneaded with such a screw configuration, the glass fiber (B) is likely to be sufficiently spread and dispersed. Particularly, it is preferable to provide a mixing screw, particularly, at least a forward conveying notched mixing screw and a reverse conveying notched mixing screw in the configuration.

The screw length in the second kneading portion is preferably set within 2.5 to 5.0D. This second kneading portion may be a single combined section or divided into a plurality of sections. That is, the second kneading portion may be divided, and a conveying screw may be interposed therebetween. In any configuration, the total length of the kneading portion is preferably set within a range of 2.5 to 5.0D. When the screw length in the second kneading portion is set as described above, the spreading and dispersion of the glass fiber (B) become favorable, and the strength of the resin composition is likely to improve.

As described above, the reinforcement material (C) other than glass fiber may be fed from the hopper 1 like the polyamide resin (A) or may be fed into the extruder from a separate place like the glass fiber (B). In addition, the first kneading portion is divided, and the other reinforcement material may be fed between the divided sections, or the second kneading portion is divided, and the other reinforcement material may be fed between the divided sections. However, the other reinforcement material is preferably fed from the same place as the polyamide resin (A) to enhance the interfacial adhesion to the polyamide resin (A).

Regarding the cylinder set temperature in the second step, it is common that the cylinder is normally operated at approximately 270°C, but the cylinder set temperature is set to a temperature lower than normal, such as 150°C to 250°C, in the method of the present invention. This second kneading portion is a step where the glass fiber (B) is fed and kneaded with the polyamide resin (A) and the other polymer or additive (D), and the resin temperature is likely to increase. When the cylinder temperature in this portion is set to a temperature range lower than normal, such as 150°C to 250°C, it is effective to suppress the break of the strand 10 when extruded from the die holder 8. When the cylinder temperature is lower than 150°C, the viscosity of the resin is likely to become high, impregnation into the glass fiber (B) does not proceed properly, the resin and the glass fiber are kneaded nonuniformly, and strands are likely to break. On the other hand, when the cylinder temperature is higher than 250°C, the temperature of the resin is likely to become high, pyrolysis gas is likely to be generated, and strands are likely to break. The resin temperature (cylinder temperature) in the second step is more preferably 160°C or higher and 240°C or lower.

The screw rotation speed in the twin screw extruder is preferably 250 to 800 rpm and more preferably 300 to 700 rpm. In addition, the discharge amount is preferably 200 to 650 kg/h and more preferably 250 to 630 kg/h in the case of "TEX44αIII" manufactured by The Japan Steel Works, Ltd., in which the cylinder diameter of the extruder is 47 mm. In extruders having different sizes, the discharge amount proportional to the cylinder diameter ratio to the power of 2.5 becomes a preferable range.

After the second step, in the third step, at the downstream portion of the second kneading portion, the vacuum vent 4 is decompressed to cause devolatilization and compression, and the strand is extruded from the die provided at the die holder 8. The degree of vacuum at the time of decompression and devolatilization in the vacuum vent 4 is preferably set to -0.097 MPa to -0.07 MPa. Here, the degree of vacuum means a gauge pressure.

In the third step, compression is performed at the screw front ends, and the composition is extruded from the die as a strand. When a horizontal flat die is provided in the die holder 8 at the front end of the twin screw extruder, and the strand is extruded therefrom, the temperature of the strand that is extruded from a die hole in the center of the horizontal flat die is made to be 310°C to 360°C.

In the present invention, (i) the temperature of the strand from the die hole at an end of the flat die is lower than the temperature of the strand from the die hole in the center of the flat die by 4°C to 14°C, or (ii) the strand is extruded such that the resin pressure in the die when the strand is extruded from the flat die reaches 2.0 to 8.5 MPa.

In the present invention, it is also preferable that (i) the temperature of the strand from the die hole at the end of the flat die is set to be lower than the temperature of the strand from the die hole in the center of the flat die by 4°C to 14°C, and (ii) the strand is extruded such that the resin pressure in the die when the strand is extruded from the flat die reaches 2.0 to 8.5 MPa.

The resin pressure in the die (also referred to as the die pressure) refers to the resin pressure at the position of the screw front end portion. The pressure at this position is highest. Normally, a resin pressure gauge 7 is installed at this position, and the pressure can be measured over time. The glass fiber (B) is normally in a bundled state during feeding, and when the resin pressure in the die is set to 2.0 MPa or higher and 8.5 MPa or lower, the glass fiber is kneaded together with the resin, the application of an appropriate pressure makes it easy to impregnate a bundle of the glass fiber (B) with the resin, uniform kneading is enabled, and it becomes easy to suppress the occurrence of strand breaks. When the resin pressure is lower than 2.0 MPa, the kneaded state of the resin and the glass fiber (B) become nonuniform, and the strand is likely to break when the strand has been extruded from the die. The glass fiber (B) is normally in a bundled state during feeding, and is kneaded together with the resin, the application of an appropriate pressure makes it easy to impregnate a bundle of the glass fiber (B) with the resin, and uniform kneading is enabled. The resin pressure in the die is more preferably 2.5 MPa or higher and still more preferably 3.0 MPa or higher. When the resin pressure is too high, a retention area at the screw front end becomes long, a gas is likely to be generated by pyrolysis, and the strand is likely to break due to the gas when the strand has extruded from the die. The resin pressure is more preferably 8.0 MPa or lower and more preferably 7.0 MPa or lower.

The temperature of the die holder 8 is preferably set to be higher than normal and is preferably 250°C or higher and 350°C or lower. When the temperature of the die holder is set to such a temperature, it becomes easy to suppress strand breaks. When the temperature is lower than 250°C, the temperature of the die is lower than the resin temperature of the resin composition, and the temperatures of the strand at both ends of the die become lower than that of the strand in the center. Therefore, a difference in viscosity is caused in the strand, and the strand is likely to break. The temperature of the die holder 8 is more preferably 260°C or higher, particularly, 270°C or higher and 280°C or higher, and still more preferably 290°C or higher. When the temperature of the die holder exceeds 350°C, a gas is likely to be generated due to heat retention in the die, and surely, the strand is likely to break. The temperature of the die holder 8 is more preferably 340°C or lower and still more preferably 330°C or lower.

A thermocouple 5 or a die holder thermocouple 9 have been inserted into the cylinder and the die holder 8 of the extruder, which makes it possible to measure the temperatures of the cylinder and the die holder. Furthermore, a heater has been combined into the cylinder or the die holder, which makes it possible to control the temperatures. The temperature of the cylinder or the temperature of the die holder refers to a temperature measured with the inserted thermocouple.

In the method of the present invention, as described above, the resin pressure in the die is set to 2.0 to 8.5 MPa or the temperature of the strand that is extruded from the die hole at the end of the horizontal flat die is set to be lower than the temperature of the strand from the die hole in the center of the flat die by 4°C to 14°C.

Fig. 2 is a view showing an example of a die portion of the twin screw extruder that is used in the present invention and is a cross-sectional view obtained by cutting the die portion on a surface parallel to the bottom surface of the die portion.

The molten polyamide resin composition is conveyed into the die portion from screws 21 of the twin screw extruder. The die portion is composed of a breaker plate 23 (or a ring plate), the die holder 8, the flange 6, a manifold portion 24, and a horizontal flat die 25. The die holder will be referred to as the die plate, and the flange will be referred to as the hinge plate depending on the situation. The combination of this flange 6 (or the hinge plate) and the die holder 8 (or the die plate) is commonly referred to as a die head.

A screen mesh can be mounted in the breaker plate 23.

The breaker plate 23 is provided with a desired number of holes having a desired diameter d and a land length L. Particularly, in a case where the screen mesh is not used, it is usual to install a ring plate 23, which is a ring-like plate. In examples and comparative examples of the present application, ring plates were installed. This breaker plate or ring plate makes it possible to prevent resin leakage.

The horizontal flat die refers to a die having die holes arranged in the horizontal direction. For example, the horizontal flat die means a die having a plurality of die holes 31, 32, and 33 arranged in one horizontal row as shown in Fig. 3(a), a die having a plurality of die holes 31, 32, and 33 arranged in the horizontal direction in a zigzag shape as shown in Fig. 3(b), or a die having a plurality of die holes 31, 32, and 33 arranged in the horizontal direction in two (upper and lower) rows as shown in Fig. 4(d). In addition, a die having a round overall shape and having die holes 31, 32, and 33 from the manifold portion 24 arranged in the horizontal direction as shown in Figs. 5(a) and 5(b) is also included in the horizontal flat die, and all of the above-described dies can be exemplified as preferable embodiments in the present invention.

In the case of the die holes arranged in the horizontal direction in two rows, i.e., upper and lower rows, as shown in Fig. 4(d), the die holes 32 and 33 at the end portions are often disposed on the lower side of the upper die holes and on the upper side of the lower die holes. Such a disposition is made in a case where a separation plate 34 is provided between the two (upper and lower) rows in the horizontal flat die 25 and the resin flow path is vertically divided.

Additionally, there is also a case where die holes are randomly disposed in the horizontal direction as shown in Fig. 4(e). In such a case, die holes 32 and 33 at the right and left ends of the die become the die holes at the end portions, and a die hole 31 closest to the geometric center when seen from the front surface of the die becomes the die hole in the center of the die. The horizontal flat die 25 is commonly positioned at the front end of the manifold portion 24 where the flow path of the resin spreads in the horizontal direction in a die holder and refers to a die having die holes arranged in the horizontal direction. All of the diameters d of the individual die holes do not need to be the same diameter, the land lengths L of the die holes also do not need to be the same length, and the diameter d or the land length L may be different for each die hole.

The shape of the extrusion die is not particularly limited, and a well-known shape is used. While depending on the desired dimension of pellets, the diameter d of the die hole is normally 2 to 5 mm and preferably approximately 3 to 4 mm.

All of the diameters d of the individual die holes do not need to be the same diameter, the land lengths L of the die holes also do not need to be the same length, and the diameter d or the land length L may be different for each die hole.

In the case of producing glass fiber-reinforced polyamide resin composition pellets, it is advantageous to use this horizontal flat die in terms of improving the productivity. Additionally, there is a so-called round die as shown in Fig. 3(c), that is, a die in which die holes are disposed on the circumference, but the number of die holes becomes large in a case where high discharge is desired. In such a case, the diameter of the circumference becomes large, the distance from strands extruded from the die holes on the circumference to a water tank becomes long, and the strands become unstable and easily break. As described above, for productivity improvement, the horizontal flat die is advantageous for stable production. Dies in which the die holes are not arrange in the horizontal direction but are arrange on the circumference are not within the scope of the present invention.

However, in the case of the horizontal flat die, strands from the die holes 32 and 33 at the end portions are more likely to break than strands from the die holes 31 inside. The strands extruded from the die holes 32 and 33 at the end portions are likely to bend outward when seen from the center of the die. This is a phenomenon called curling, and the strands extruded from the die holes 32 and 33 at the end portions tend to draw a spiral (curl) while spinning outward. This curling makes the strands extruded from the die holes at the end portions likely to break. This phenomenon becomes more significant as the concentration of the glass fiber or the other reinforcement material becomes higher.

The cause of this curling is not clear, but the die holes 32 and 33 at the end portions are likely to be affected by the wall surface of the die holder. It is considered that a friction force between the resin and the wall surface of the die holder remains as residual stress and causes the phenomenon of the strands bending outward (curling). In the present invention, the temperature of the strand from the die hole in the center is set to 310°C to 360°C, and a temperature difference of 4°C to 14°C is intentionally made between the strands from the center of the die and from the end portion of the die, whereby it is possible to completely or largely prevent strand breaks at the end portions and to suppress the strand breaks of all strands.

The strand temperature in the center of the die refers to the strand temperature immediately after the strand is extruded from the die hole 31 closest to the geometric center when seen from the front surface of the die. The temperature immediately after the strand is extruded from the die is the temperature immediately after the strand is extruded from the die hole in the center of the die when the number of die holes in the die where the die holes are arranged in the horizontal direction at equal intervals is an odd number and is the average value of the temperatures of two strands immediately after being extruded from the center of the die when the number of die holes is an even number.

This strand temperature in the center of the die can be directly measured by bringing the thermocouple into contact with the strand. In addition, the strand temperature can also be measured with an infrared temperature measuring instrument. This strand temperature in the center of the die can be considered to be close to the resin temperature in the die.

The temperature of the strand at the end portion of the die refers to the strand temperature at one of the both (right and left) ends 32 and 33 of the die when seen from the front surface of the die. In a case where the right and left temperatures of the strand are different from each other, the temperature is defined as the average value thereof. Similarly, the temperature is the strand temperature immediately after the strand is extruded from the die. The temperature of the strand at the end portion is likely to be affected by the die holder, the flange, and the temperature of the die. However, the die holder, the flange, and the die are different for each extruder, the relationship between the temperatures thereof and the strand temperature at the end portion is thus not uniformly determined.

A temperature (ΔT) obtained by subtracting the temperature of the strand at both ends of the die from the temperature of the strand in the center of the die is set to 4°C or higher and 14°C or lower. When ΔT is set as described above, strand breaks at the end portions are completely prevented, and it is possible to suppress the strand breaks of all of the strands. When ΔT is less than 4°C, since the temperature of the strand is high, the elastic recovery forces of the strand at the end portions decrease, and the strand is likely to break by curling (the elastic recovery force against curling is weak). On the other hand, when ΔT is larger than 14°C, a force that causes curling becomes strong, and the strand breaks by curling. ΔT can be adjusted to 4°C or higher and 14°C or lower by, for example, setting the temperature of the die holder to be slightly lower than the resin temperature in the die.

ΔT is preferably 5°C or higher, and more preferably 6°C or higher, and is preferably 13°C or lower, and more preferably 12°C or lower.

The temperature of the strand from the center of the die must be 310°C or higher and 360°C or lower. When the temperature is made to be as described above, impregnation of the bundle of the glass fiber with the resin component of the resin composition becomes favorable, and the strand break can be prevented by making ΔT be as described above. When the temperature is lower than 310°C, the viscosity of the resin component of the resin composition is high, impregnation of the bundle of the glass fiber is poor, the fiber in a bundled state remain, a stress concentration point is generated in the strand when the strand has been extruded from the die, and the strand easily breaks.

The temperature of the strand from the center of the die is preferably 315°C or higher and more preferably 320°C or higher. On the other hand, when the temperature exceeds 360°C, the polyamide resin (A) is pyrolyzed, a gas is generated, and the strand easily breaks due to the gas when the strand has been extruded from the die. In addition, in a case where a plurality of kinds of polyamide resin are used, an amide interchange reaction proceeds, and the physical properties are likely to deteriorate. The temperature of the strand from the center of the die is preferably 355°C or lower and more preferably 350°C or lower.

In the fourth step, the strand 10 extruded from the die is cooled with water and cut with the pelletizer 11. The strand temperature at the time of cutting the strand is preferably 100°C or higher and 160°C or lower. When the temperature is made to be as described above, it becomes easy to suppress the generation of chips or the generation of pellets with a poor shape. When the temperature is lower than 100°C, the strand is hard, and chips are likely to be generated when the strand is cut with the pelletizer. Therefore, plasticization during molding, such as injection molding, is likely to be unstable. When the temperature exceeds 160°C, the aspect ratio of the elliptical cylinder shapes of the cut pellets becomes large. This also causes poor plasticization in some cases. The strand temperature at the time of cutting the strand is more preferably 110°C or higher and 150°C or lower.

The glass fiber-reinforced polyamide resin composition into which the glass fiber (B) or the other reinforcement material (C) has been blended at a high concentration is likely to break before the strand extruded from the die is cooled and cut. The amount of the resin component is small, the viscoelastic property becomes weak, and the strand loses toughness, becomes brittle, and is likely to break. Since the amount of the glass fiber is large, a bundle of the fiber with poor spreading-ability is likely to be generated. The bundle of the fibers with poor spreading-ability is likely to act as a starting point of breaking when the strand is pulled (stretched). Furthermore, when the bundle of the fiber is impregnated with a small amount of the resin (the bundle of the glass fiber is not sufficiently impregnated with the resin), there is also a case where that portion acts as a starting point of breaking. In addition, since the concentration of the glass fiber or the other reinforcement material is high, the viscosity of the resin becomes high, and the resin temperature is likely to increase. This generates a pyrolysis gas, which causes a strand to break when the strand has been extruded from the die. As described above, the deterioration of the toughness of the strand, the insufficient spreading of the bundle of the glass fibers, the insufficient impregnation of the bundle of the glass fibers with the resin, the generation of the gas, and the like make it difficult to stably cut the strand. When the strand breaks, there is a need to manually fed the strand into pelletizer again. At that time, the flow of all strands is disturbed, the strands are fed in an inclined direction with respect to the cutter, and long pellets are likely to be generated. In addition, since the concentration of the glass fiber is high and the strand is hard, the cut surface with the pelletizer does not become sharp, but becomes dull, and chips are generated. There is a need to increase the strand cutting temperature to suppress the generation of chips. This makes the strands be sharply cut and reduces chips. However, when the strand cutting temperature is excessively increased, the strands become soft and are crushed with a haul-off roll of the pelletizer, and the eccentricity of the elliptically cylindrical pellets becomes large. As the number of these long pellets or chips increases, and the aspect ratio becomes larger, poor plasticization is more likely to be caused at the time of injection molding using the pellets, and the deterioration of the productivity is caused. The number of long pellets (normally, twice or more the length of the pellet) is preferably less than three per kilogram. The amount of chips is preferably 300 mass ppm or less in the total mass (pellets and chips). In addition, the aspect ratio (major axis/minor axis) is preferably 1.30 or less.

The strand 10 is drawn off with the haul-off roller, brought into contact with water, and cooled. Regarding the contact with water, the strand may be cooled by being transported into water accumulated in a cooling water tank 13, the strand 10 may be brought into contact with water by sprinkling the water and be cooled, or the strand may be brought into water by a method in which the strand is pulled with a mesh belt conveyor and water is sprinkled thereon with a water spray device. The time taken for the strand to be extruded from the die and then cooled with water or to be inserted into water is preferably short. Normally, it is preferable to fed the strand into water within one second from the extrusion from the die.

The cooled strand is sent to the pelletizer with the haul-off roller, cut, and made into pellets.

In the method of the present invention, the shear viscosity at 280°C and 91 /sec of the glass fiber-reinforced polyamide resin composition is set to 400 Pa·s or higher and 2000 Pa·s or lower. When the shear viscosity is made to be within a range of 400 Pa·s or higher and 2000 Pa·s or lower, and the individual steps described above are combined together, strand breaks are suppressed, and continuous and stable production is enabled. When the shear viscosity is below 400 Pa·s, the elastic property of the strand is weak, and the strand is likely to break. In addition, when the shear viscosity exceeds 2000 Pa·s, shear heating becomes large, the resin temperature increases, pyrolysis occurs, and the strand easily breaks. A more preferable range is 500 Pa·s or higher and 1700 Pa·s or lower, and a still more preferable range is 600 Pa·s or higher and, preferably, 1400 Pa·s or lower.

The shear viscosity is a value that is measured at 280°C and a shear rate of 91 /sec in accordance with JIS K 7199 using a capillary rheometer (Capilograph manufactured by Toyo Seiki Seisaku-sho, Ltd., 1D2) and an orifice having a capillary diameter of 1 mm and a capillary length of 3 mm.

The shear viscosity can be adjusted to the above-described range by changing the viscosity of the polyamide resin (A) or can be adjusted by a method in which the amount, molecular weight or the like of the other polymer or additive (D) to be blended is adjusted. The shear viscosity can also be adjusted by changing the amount of the glass fiber (B) or the other reinforcement material (C). Furthermore, there is also a case where the resin component undergoes pyrolysis, hydrolysis, or an amide interchange reaction due to the thermal history in the extruder and the shear viscosity decreases.

Next, raw material components that are used in the present invention will be described.

### (A) Polyamide resin

The polyamide resin (A) is not particularly limited, and examples thereof include polycaproamide (polyamide 6), polytetramethylene adipamide (polyamide 46), polyhexamethylene adipamide (polyamide 66), polyundecamethylene adipamide (polyamide 116), polymetaxylylene adipamide (polyamide MXD6), polyparaxylylene adipamide (polyamide PXD6), polyxylylene sebacamide (polyamide XD10), polytetramethylene sebacamide (polyamide 410), polyhexamethylene sebacamide (polyamide 610), polydecamethylene adipamide (polyamide 106), polydecamethylene sebacamide (polyamide 1010), polyhexamethylene dodecamide (polyamide 612), polydecamethylene dodecamide (polyamide 1012), polyhexamethylene isophthalamide (polyamide 6I), polytetramethylene terephthalamide (polyamide 4T), polypentamethylene terephthalamide (polyamide 5T), poly-2-methylpentamethylene terephthalamide (polyamide M-5T), polyhexamethylene terephthalamide (polyamide 6T), polyhexamethylene hexahydroterephthalamide (polyamide 6T(H)), polynonamethylene terephthalamide (polyamide 9T), polydecamethylene terephthalamide (polyamide 10T), polyundecamethylene terephthalamide (polyamide 11T), polydodecamethylene terephthalamide (polyamide 12T), polylauryl lactam (polyamide 12), poly-11-aminoundecanoic acid (polyamide 11), copolymers containing constituent units thereof, and the like.

Only one kind of the polyamide resin (A) may be used singly, or a plurality of kinds thereof may be used in combination. Among them, the polyamide resin (A) is preferably polycaproamide (polyamide 6), polyhexamethylene adipamide (polyamide 66), polymetaxylylene adipamide (polyamide MXD6), or polyhexamethylene terephthalamide (polyamide 6T) in terms of heat resistance and versatility.

### (B) Glass fiber

As the glass fiber (B), any known glass fibers can be used as long as the glass fiber are normally used in polyamide resin regardless of the form of the glass fiber during blending, such as an alkali-resistant glass composition containing A glass, E glass, and a zirconia component, chopped strands, roving glass, or a masterbatch of a thermoplastic resin and glass fiber. Among them, the glass fiber (B) that are used in the present invention are preferably alkali-free glass (E glass) for the purpose of improving the thermal stability of the resin composition.

The glass fiber (B) may be a glass fiber having a round longitudinal cross section, and a glass fiber having an aspect ratio of a longitudinal cross section within a range of 2.0 to 6.0 is also preferably used.

The aspect ratio of a longitudinal cross section refers to the ratio of the major axis to the minor axis when a rectangle having the minimum area that circumscribes a cross section perpendicular to the longitudinal direction of the glass fiber is assumed, the length of the long side of this rectangle is defined as the major axis, and the length of the short side is defined as the minor axis.

The cross-sectional area of the glass fiber (B) in the longitudinal direction is preferably beyond 90 µm² and 300 µm² or less, and when the cross-sectional area is as described above, the polyamide resin (A) is likely to become the matrix, and it is easy to effectively improve the heat resistance. The cross-sectional area is more preferably beyond 90 µm² and 250 µm² or less, and still more preferably beyond 90 µm² and 200 µm² or less.

The thickness of the glass fiber (B) is not particularly limited, but it is preferable that the short diameter is 2 to 20 µm and the long diameter is approximately 5 to 50 µm.

The glass fiber (B) may be treated with a sizing agent or a surface treatment agent. In addition, separately from the untreated glass fiber, a sizing agent or a surface treatment agent may be added to treat the surface during the production of the resin composition of the present invention.

Examples of the sizing agent include resin emulsions such as a vinyl acetate resin, an ethylene/vinyl acetate copolymer, an acrylic resin, an epoxy resin, a polyurethane resin, and a polyamide resin.

Examples of the surface treatment agent include aminosilane compounds such as γ-aminopropyltriethoxysilane, γ-aminopropyltrimethoxysilane, and γ-(2-aminoethyl)aminopropyltrimethoxysilane; chlorosilane compounds such as vinyltrichlorosilane and methylvinyldichlorosilane; alkoxysilane compounds such as vinyltrimethoxysilane, vinyltriethoxysilane, vinyltriacetoxysilane, and γ-methacryloxypropyltrimethoxysilane; epoxysilane compounds such as β-(3,4-epoxycyclohexyl)ethyltrimethoxysilane and γ-glycidoxypropyltrimethoxysilane; acrylic compounds, isocyanate compounds, titanate compounds, epoxy compounds, and the like.

Two or more of these sizing agents or the surface treatment agents may be jointly used, and the amount used (amount attached) is normally 10 mass% or less and preferably 0.05 to 5 mass% relative to the mass of the glass fiber (B). When the amount attached is made to be 10 mass% or less, a necessary and sufficient effect can be obtained, which is preferable.

Two or more kinds of the glass fiber (B) may be jointly used depending on required characteristics.

The content of the glass fiber (B) is set to a content as high as 10 to 75 mass% relative to 100 mass% of the total of the polyamide resin (A), the glass fiber (B), the reinforcement material (C) other than glass fiber, and the other polymer or additive (D). When the content of the glass fiber (B) is less than 10 mass%, the stiffness is likely to be insufficient, and conversely, when the content exceeds 75 mass%, the fluidity is likely to be insufficient, and production is likely to be difficult. The content of the glass fiber (B) is more preferably 15 mass% or more and still more preferably 20 mass% or more, and more preferably 70 mass% or less and still more preferably 65 mass% or less.

### (C) Other reinforcement material

The other reinforcement material (C) than glass fiber refers to a reinforcement material other than glass fiber that is a substance capable of enhancing mechanical characteristics, specifically, the mechanical characteristics of a molded product obtained by molding pellets. The shape of the reinforcement material (C) is not particularly limited and may be, for example, a fibrous shape or a granular shape.

The reinforcement material (C) other than glass fiber is not particularly limited, and examples thereof include glass flakes, glass beads, powdery glass (milled fiber), acicular wollastonite, mica, talc, uncalcined clay, whiskers (for example, potassium titanate whiskers), titanium dioxide, carbon fiber, ceramic fiber, silica, alumina, kaolin, quartz, graphite, calcium carbonate, barium sulfate, carbon black, metal powders, and the like. Among them, inorganic reinforcement materials, such as mica and talc, are preferable. The other reinforcement material (C) may be used solely or a plurality thereof may be used in combination.

The amount of the other reinforcement material (C) is 0 to 40 mass%, preferably 35 mass% or less, more preferably 30 mass% or less, and still more preferably 28 mass% or less based on 100 mass% of the total of (A) to (D).

### (D) Other polymer or additive

The other polymer or additive (D) is another polymer than the polyamide resin (A) and/or a variety of different additives.

The polymer other than the polyamide resin (A) is not particularly limited, and examples thereof include polyphenylene sulfide (PPS), liquid crystal polymer (LCP), aramid resin, polyether ether ketone (PEEK), polyetherketone (PEK), polyetherimide (PEI), thermoplastic polyimide, polyamideimide (PAI), polyetherketoneketone (PEKK), polyphenylene ether (PPE), polyethersulfone (PES), polysulfone (PSU), polyarylate (PAR), polyester (PEs), polycarbonate (PC), polyoxymethylene (POM), polypropylene (PP), polyethylene (PE), polymethylpentene (TPX), polystyrene (PS), polymethylmethacrylate, acrylonitrile-styrene copolymers (AS), acrylonitrile-butadienestyrene copolymers (ABS), fluororesin, polyacrylates, and the like. Among these, polyphenylene ether (PPE) and polypropylene (PP) are preferable.

The other polymer (D) may be singly contained, or two or more other polymers may be contained in arbitrary combination and proportion.

Examples of the other additive include a flame retardant, a flame retardant assistant, an impact modifier for elastomers and the like, a stabilizer, a mold-release agent, a colorant such as a dye or a pigment, a catalyst deactivator, an antistatic agent, a foaming agent, a plasticizer, a crystal nucleating agent, a crystallization accelerator, and the like.

Examples of the stabilizer include organic antioxidants such as a hindered phenolic antioxidant, a sulfur antioxidant, and a phosphorus antioxidant; heat stabilizers; hindered amine-, benzophenone-, imidazole-, and other light stabilizers; ultraviolet absorbers; metal deactivators; copper compounds; alkali metal halide compounds; and the like. Among these, a copper compound is preferable. The stabilizer may be used solely, and a plurality thereof may be used in combination. The content of the stabilizer can be appropriately adjusted, and is preferably 5 mass% or less, more preferably 4 mass% or less, and still more preferably 3 mass% or less in 100 mass% of the resin composition.

Here, the content of the stabilizer refers to the total content of the stabilizers in a case where the composition contains a plurality of stabilizers.

As the copper compound that can be used as the stabilizer, copper salts of organic carboxylic acids, such as cuprous chloride, cuprous bromide, cuprous iodide, cupric chloride, cupric bromide, cupric iodide, cupric phosphate, cupric pyrophosphate, copper sulfide, copper nitrate, and copper acetate, and the like can be used. The copper compound may be used solely or a plurality thereof may be used in combination.

Examples of the mold-release agent include long-chain fatty acids or esters and metal salts thereof, amide compounds, polyethylene wax, silicone, polyethylene oxide, and the like.

The long-chain fatty acids particularly preferably have 12 or more carbon atoms, and examples thereof include stearic acid, 12-hydroxystearic acid, behenic acid, montanic acid, and the like. Part or all of the carboxylic acids may have been esterified with a monoglycol or a polyglycol or may have formed a metal salt. Examples of the amide compounds include ethylene bis-terephthalamide, methylene bis-stearyl amide, and the like. These mold-release agents may be used singly or as a mixture.

The content of the mold-release agent is preferably 0.01 mass% or more and more preferably 0.05 mass% or more and preferably 5.0 mass% or less, more preferably 3.0 mass% or less, and still more preferably 1.0 mass% or less in 100 mass% of the resin composition.

The amount of the other polymer or additive (D) is 0 to 30 mass%, preferably 25 mass% or less, more preferably 20 mass% or less, and still more preferably 17 mass% or less based on 100 mass% of the total of (A) to (D).

The glass fiber-reinforced polyamide resin composition produced by the method of the present invention enables a molded product having a high strength and is thus capable of sufficiently satisfying required performances such as weight reduction, thickness reduction, and strength and can be widely used in molded products, parts, or the like in, for example, the precision equipment field, the automotive field, the electrical and electronic equipment field, the computer and other office automation equipment field, the optical equipment field, a variety of other industrial fields, and the like.

### [Examples]

Hereinafter, the present invention will be more specifically described by showing examples. However, the present invention is not limited to the following examples and can be arbitrarily modified within the scope of the gist of the present invention and carried out.

[(i) Examples and comparative examples in which the temperature of a strand from a die hole at the end of a horizontal flat die is lower than the temperature of the strand from the die hole at the center of the horizontal flat die by 4 to 14°C]

Raw material components used and blending proportions thereof (formulation) are as described in Table 1 below.

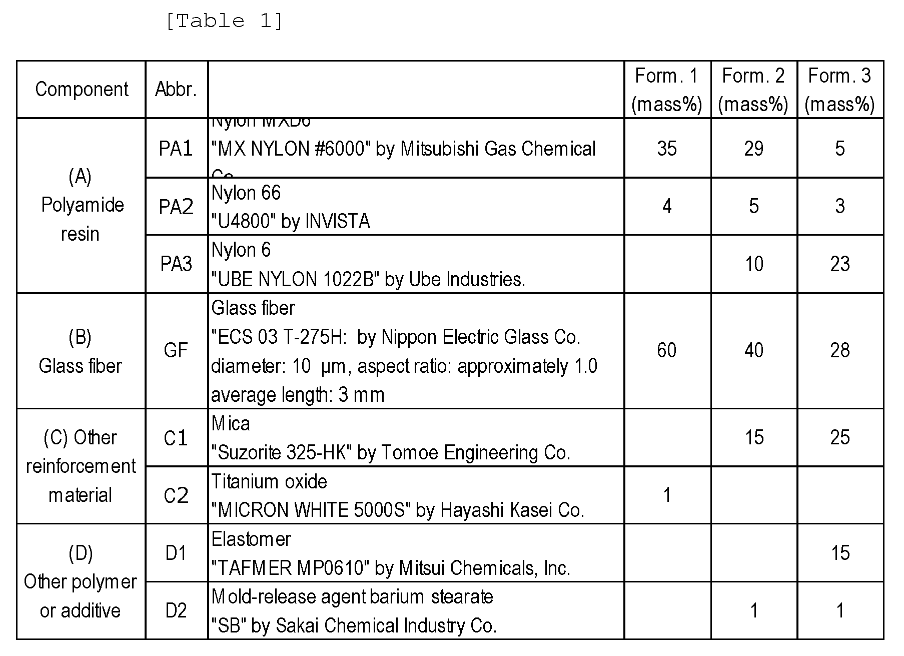

In the following examples and comparative examples, as an extruder, an intermeshing co-rotating vented twin screw extruder ("TEX44αIII" manufactured by The Japan Steel Works, Ltd., cylinder diameter D = 47 mm) was used.

The screw configuration is shown in Fig. 6.

A cylinder position C1 was a feed cylinder (also referred to as a barrel), C7 and C12 were vent cylinders, C7 was an open vent, C12 was a vacuum vent, and C9 was a side feed cylinder. A first kneading portion where a polyamide resin (A) and an other polymer (D) were melt-kneaded was disposed from C5 through C6, and as the screw configuration thereof, R R N N L, each of which had five paddles and was 1Ds long (1Ds = 44 mm), were provided. Glass fiber (B) were side-fed from C9. In a second kneading portion where the glass fiber (B) were kneaded, R having five paddles and a length of 1Ds and three back mixing screws, which were each, similarly, 1Ds long, (lead 0.25Ds) were disposed as shown in Fig. 6.

A kneading portion where the polyamide resin (A) and the other polymer or additive (D) were added and the glass fiber (B) were fed is the first kneading portion, and C1 to C9 is a first step. Another reinforcement material (C) than glass fiber were also fed to a feed cylinder C1 like the polyamide resin (A) and the other polymer (D).

Next, a kneading portion where the glass fiber (B) were fed into the extruder and the vacuum vent was provided is a second kneading portion, and C10 to C11 is a second step. C12 to C14 where a die holder was included and a kneaded resin composition was extruded from a die is a third step. Furthermore, a step of cooling a strand extruded from the die with water and cutting the strand with a pelletizer to obtain pellets is a fourth step.

In Examples 1 to 7 and Comparative Examples 1 to 4 to be described below, resin compositions were produced in raw material proportions shown by a formulation 1 in Table 1.

### Example 1

87.5 kg/h of nylon MXD6 (PA1), 10 kg/h of nylon 66 (PA2), and 2.5 kg/h of titanium oxide (C2), which was another reinforcement material, were fed from a main raw material hopper to a feed barrel C1 of the twin screw extruder (TEX44αIII" manufactured by The Japan Steel Works, Ltd.), and 150 kg/h of glass fiber (GF) were further fed from a side feed hopper to a side feed cylinder C9. The amount of the raw materials fed was set to 250 kg/h in total, and the screw rotation speed was set to 300 rpm.

The set temperatures of the cylinders C2 to C9 and the cylinders C12 to C14 were set to 270°C. The cylinder set temperatures of C10 and C11 in the second kneading portion were set to 220°C. The set temperature of the die holder, which was present in the third step, was set to 310°C. The temperature of a flange was also set to 310°C. In addition, as a horizontal flat die, a die in which the hole diameter of a die hole was 3.8 mm, a land length was 20 mm, and the number of die holes was 10 was used. The resin pressure of the die holder at this time was 4.9 MPa. The average temperature of two strands in the center of the die was 345°C. The average temperature of strands at both ends of the die was 339°C. In all of the examples and the comparative examples, the temperatures of the flanges were set to the same as the temperature of the die holder.

The haul-off rate of the pelletizer was set to 40 m/minute. Extrusion was continued for one hour under this condition. All of the 10 strands were stable and did not break even a single time. Some of the strands at both ends of the die looked as if the strands slightly curled outward, but did not break.

Strands extruded from the die were cooled in a water tank, the strands were cut with the pelletizer, and pellets having an average length of 3 mm were obtained.

The obtained pellets were dried at 120°C for five hours, and the shear viscosity at a temperature of 280°C and a shear rate of 91 /sec was obtained using "Capilograph 1D2" manufactured by Toyo Seiki Seisaku-sho, Ltd. and an orifice having a capillary diameter of 1 mm and a capillary length of 3 mm. The shear viscosity was 1080 Pa·s.

One kilogram of the produced pellets were visually confirmed, and the number of long pellets (pellets having a length of 6 mm or longer) were counted.

Strand break evaluation was determined by the following standards.
A: The number of times of strand breaks is 0 /hour
B: The number of times of strand breaks is 1 to 2 /hour
C: The number of times of strand breaks is 3 to 5 /hour
D: The number of times of strand breaks is 6 to 9 /hour
E: The number of times of strand breaks is 10 /hour or more

The above-described results are shown in Table 2 below.

### Example 2

Example 1 was performed in the same manner except that the hole diameter was set to 3.8 mm, the number of holes was set to, similarly, 10, and the land length was set to 10 mm in the horizontal flat die.

### Example 3

Example 1 was performed in the same manner except that the hole diameter was set to 3.8 mm, the number of holes was set to, similarly, 10, and the land length was set to 30 mm in the horizontal flat die.

### Example 4

Example 1 was performed in the same manner except that the temperature of the die holder was set to 285°C.

### Example 5

Example 1 was performed in the same manner except that the temperature of the die holder was set to 335°C.

### Example 6

Example 1 was performed in the same manner except that the temperature of the die holder was set to 260°C.

### Example 7

Example 1 was performed in the same manner except that the temperature of the die holder was set to 345°C.

### Comparative Example 1

Example 1 was performed in the same manner except that the temperature of the die holder was set to 240°C. The temperature difference ΔT between the temperature of the strand in the center of the die and the strand at both ends of the die was 16°C. All strand breaks occurred at both ends of the die. Curling was strong, and an appearance of strands bending toward the outside of the die was shown, which was considered as curling break.

### Comparative Example 2

Example 1 was performed in the same manner except that the temperature of the die holder was set to 360°C. The temperature difference ΔT between the temperature of the strand in the center of the die and the strand at both ends of the die was as small as 3°C. The temperature of the strand in the center of the die was also as high as 357°C, and strands broke seven times at both ends of the die and 11 times inside. It was considered that ΔT was small, there was no resistance to curling, strands broke, the resin temperature was also high, a gas was generated, and strands broke even inside.

### Comparative Example 3

Example 1 was performed in the same manner except that the screw rotation was set to 200 rpm, and in the horizontal flat die, the hole diameter was set to 3.8 mm, the number of holes was set to, similarly, 10, and the land length was set to 10 mm. The temperature of the strand in the center of the die was 308°C. It was considered that the temperature of the resin was low, impregnation of the fiber was insufficient, poor spreading occurred, and strand breaks occurred frequently.

### Comparative Example 4

Example 1 was performed in the same manner except that the screw rotation was set to 500 rpm. The temperature of the strand in the center of the die was 367°C. Strands broke similarly not only inside but also at both ends of the die. The strand surfaces were beautiful, and no poor glass spreading was shown. Strand breaks occurred at the outlet of the die and were thus considered as breaks due to a gas.

The above-described results are shown in Table 2 below.

**[Table 2]**

| | | Example | | | | | | | Comp. Example | | | |
|---|---|---|---|---|---|---|---|---|---|---|---|---|
| | | 1 | 2 | 3 | 4 | 5 | 6 | 7 | 1 | 2 | 3 | 4 |
| Formulation | | 1 | 1 | 1 | 1 | 1 | 1 | 1 | 1 | 1 | 1 | 1 |
| Discharge amount | kg/h | 250 | 250 | 250 | 250 | 250 | 250 | 250 | 250 | 250 | 250 | 250 |
| Screw rotation speed | rpm | 300 | 300 | 300 | 300 | 300 | 300 | 300 | 300 | 300 | 200 | 500 |
| Die land length | mm | 20 | 10 | 30 | 20 | 20 | 20 | 20 | 20 | 20 | 10 | 20 |
| Resin pressure | MPa | 4.9 | 2.8 | 7.4 | 5.0 | 4.8 | 5.4 | 4.5 | 5.6 | 4.1 | 4.4 | 3.6 |
| Die holder temperature | °C | 310 | 310 | 310 | 285 | 335 | 260 | 345 | 240 | 360 | 310 | 310 |
| Strand temperature in die center | °C | 345 | 340 | 349 | 343 | 350 | 341 | 352 | 338 | 357 | 308 | 367 |
| Strand temperature at both end of die | °C | 339 | 335 | 343 | 334 | 345 | 329 | 347 | 322 | 354 | 303 | 358 |
| Temperature difference between center and both ends ( ΔT) | °C | 6 | 5 | 6 | 9 | 5 | 12 | 5 | 16 | 3 | 5 | 9 |
| Number of strand breaks inside (/hr) | Breaks | 0 | 2 | 3 | 0 | 2 | 0 | 3 | 0 | 11 | 9 | 17 |
| Number of strand breaks at both ends (/hr) | Breaks | 0 | 0 | 0 | 2 | 1 | 5 | 2 | 13 | 7 | 5 | 6 |
| Number of all strand breaks (/hr) | Breaks | 0 | 2 | 3 | 2 | 3 | 5 | 5 | 13 | 18 | 14 | 23 |
| Strand break evaluation | | A | B | C | B | C | C | C | E | E | E | E |
| Number of long pellets (/kg) | Pellets | 0 | 0 | 0 | 0 | 0 | 1 | 1 | 4 | 4 | 3 | 4 |
| Shear viscosity | Pa·s | 1080 | 1110 | 1070 | 1100 | 1050 | 1130 | 1030 | 1140 | 990 | 1180 | 920 |

In Examples 8 to 14 and Comparative Examples 5 to 8, resin compositions were produced in raw material proportions shown by a formulation 2 in Table 1.

### Example 8

An experiment was performed in the same manner as in Example 1 except that 72.5 kg/h of nylon MXD6 (PA1), 12.5 kg/h of nylon 66 (PA2), 25 kg/h of nylon 6 (PA3), 37.5 kg/h of mica (C1), which was another reinforcement material, and 2.5 kg/h of a mold-release agent (D2) were fed from the main raw material hopper to feed barrel C1 of the twin screw extruder (TEX44αIII" manufactured by The Japan Steel Works, Ltd.), and 100 kg/h of glass fiber (GF) were further fed from side feed hopper to side feed cylinder C9.

Some of the strands at both ends looked as if the strands slightly curled outward, but did not break.

Strands extruded from the die were cooled in the water tank, and the strands were cut with the pelletizer, thereby obtaining pellets. The shear viscosity of the pellets measured in the same manner as in Example 1 was 1030 Pa·s.

### Example 9

Example 8 was performed in the same manner except that the hole diameter was set to 3.8 mm, the number of holes was set to, similarly, 10, and the land length was set to 10 mm in the horizontal flat die.

### Example 10

Example 8 was performed in the same manner except that the hole diameter was set to 3.8 mm, the number of holes was set to, similarly, 10, and the land length was set to 30 mm in the horizontal flat die.

### Example 11

Example 8 was performed in the same manner except that the temperature of the die holder was set to 285°C.

### Example 12

Example 8 was performed in the same manner except that the temperature of the die holder was set to 335°C.

### Example 13

Example 8 was performed in the same manner except that the temperature of the die holder was set to 260°C.

### Example 14

Example 8 was performed in the same manner except that the temperature of the die holder was set to 345°C.

### Comparative Example 5

Example 8 was performed in the same manner except that the temperature of the die holder was set to 240°C. The temperature difference ΔT between the temperature of the strand in the center of the die and the strand at both ends of the die was 16°C. All strand breaks occurred at both ends of the die. Curling was strong, and an appearance of strands bending toward the outside of the die was shown, which was considered as curling break.

### Comparative Example 6

Example 8 was performed in the same manner except that the temperature of the die holder was set to 360°C. The temperature difference ΔT between the temperature of the strand in the center of the die and the strand at both ends of the die was as small as 2°C. The temperature of the strand in the center of the die was also as high as 354°C, and strands broke seven times at both ends of the die and 10 times inside. It was considered that ΔT was small, there was no resistance to curling, strands broke, the resin temperature was also high, a gas was generated, and strands broke even inside.

### Comparative Example 7

Example 8 was performed in the same manner except that the screw rotation was set to 200 rpm, and in the horizontal flat die, the hole diameter was set to 3.8 mm, the number of holes was set to, similarly, 10, and the land length was set to 10 mm. The temperature of the strand in the center of the die was 305°C. It was considered that the temperature of the resin was low, impregnation of the fiber was insufficient, poor spreading occurred, and strand breaks occurred frequently.

### Comparative Example 8

Example 8 was performed in the same manner except that the screw rotation was set to 500 rpm. The temperature of the strand in the center of the die was 364°C. Strands broke similarly not only inside but also at both ends of the die. The strand surfaces were beautiful, and no poor glass spreading was shown. Strand breaks occurred at the outlet of the die and were thus considered as breaks due to a gas.

The above-described results are shown in Table 3 below.

**[Table 3]**

| | | Example | | | | | | | Comp. Example | | | |
|---|---|---|---|---|---|---|---|---|---|---|---|---|
| | | 8 | 9 | 10 | 11 | 12 | 13 | 14 | 5 | 6 | 7 | 8 |
| Formulation | | 2 | 2 | 2 | 2 | 2 | 2 | 2 | 2 | 2 | 2 | 2 |
| Discharge amount | kg/h | 250 | 250 | 250 | 250 | 250 | 250 | 250 | 250 | 250 | 250 | 250 |
| Screw rotation speed | rpm | 300 | 300 | 300 | 300 | 300 | 300 | 300 | 300 | 300 | 200 | 500 |
| Die land length | mm | 20 | 10 | 30 | 20 | 20 | 20 | 20 | 20 | 20 | 10 | 20 |
| Resin pressure | MPa | 4.8 | 2.5 | 7.1 | 4.8 | 4.5 | 5.1 | 4.2 | 4.6 | 3.5 | 3.8 | 3.1 |
| Die holder temperature | °C | 310 | 310 | 310 | 285 | 335 | 260 | 345 | 240 | 360 | 310 | 310 |
| Strand temperature in die center | °C | 342 | 337 | 345 | 339 | 347 | 340 | 349 | 335 | 354 | 305 | 364 |
| Strand temperature at both end of die | °C | 335 | 331 | 339 | 329 | 342 | 329 | 344 | 319 | 352 | 300 | 355 |
| Temperature difference between center and both ends ( ΔT) | °C | 7 | 6 | 6 | 10 | 5 | 11 | 5 | 16 | 2 | 5 | 9 |
| Number of strand breaks inside (/hr) | Breaks | 0 | 2 | 3 | 0 | 2 | 0 | 2 | 0 | 10 | 11 | 15 |
| Number of strand breaks at both ends (/hr) | Breaks | 0 | 0 | 0 | 3 | 1 | 5 | 2 | 14 | 7 | 3 | 5 |
| Number of all strand breaks (/hr) | Breaks | 0 | 2 | 3 | 3 | 3 | 5 | 3 | 14 | 17 | 14 | 20 |
| Strand break evaluation | | A | B | C | C | C | C | C | E | E | E | E |
| Number of long pellets (/kg) | Pellets | 0 | 0 | 1 | 0 | 0 | 0 | 0 | 4 | 5 | 3 | 5 |
| Shear viscosity | Pa·s | 1030 | 1050 | 1030 | 1050 | 1010 | 1100 | 990 | 1110 | 970 | 1170 | 910 |

In Examples 15 to 21 and Comparative Examples 9 to 12, resin compositions were produced in raw material proportions shown by a formulation 3 in Table 1.

### Example 15

An experiment was performed in the same manner as in Example 1 except that 12.5 kg/h of nylon MXD6 (PA1), 7.5 kg/h of nylon 66 (PA2), 57.5 kg/h of nylon 6 (PA3), 62.5 kg/h of mica (C1), which was another reinforcement material, and 2.5 kg/h of the mold-release agent (D2) were fed from the main raw material hopper to feed barrel C1 of the twin screw extruder (TEX44αIII" manufactured by The Japan Steel Works, Ltd.), and 70 kg/h of glass fiber (GF) were further fed from side feed hopper to side feed cylinder C9.

Some of the strands at both ends looked as if the strands slightly curled outward, but did not break.

Strands extruded from the die were cooled in the water tank, and the strands were cut with the pelletizer, thereby obtaining pellets. The shear viscosity of the pellets measured in the same manner as in Example 1 was 1110 Pa·s.

### Example 16

Example 15 was performed in the same manner except that the hole diameter was set to 3.8 mm, the number of holes was set to, similarly, 10, and the land length was set to 10 mm in the horizontal flat die.

### Example 17

Example 15 was performed in the same manner except that the hole diameter was set to 3.8 mm, the number of holes was set to, similarly, 10, and the land length was set to 30 mm in the horizontal flat die.

### Example 18

Example 15 was performed in the same manner except that the temperature of the die holder was set to 285°C.

### Example 19

Example 15 was performed in the same manner except that the temperature of the die holder was set to 335°C.

### Example 20

Example 15 was performed in the same manner except that the temperature of the die holder was set to 260°C.

### Example 21

Example 15 was performed in the same manner except that the temperature of the die holder was set to 345°C.

### Comparative Example 9

Example 15 was performed in the same manner except that the temperature of the die holder was set to 240°C. The temperature difference ΔT between the temperature of the strand in the center of the die and the strand at both ends of the die was 17°C. All strand breaks occurred at both ends of the die. Curling was strong, and an appearance of strands bending toward the outside of the die was shown, which was considered as curling break.

### Comparative Example 10

Example 15 was performed in the same manner except that the temperature of the die holder was set to 360°C. The temperature difference ΔT between the temperature of the strand in the center of the die and the strand at both ends of the die was as small as 1°C. The temperature of the strand in the center of the die was also as high as 360°C, and strands broke five times at both ends of the die and 12 times inside. It was considered that ΔT was small, there was no resistance to curling, strands broke, the resin temperature was also high, a gas was generated, and strands broke even inside.

### Comparative Example 11

Example 15 was performed in the same manner except that the screw rotation was set to 200 rpm, and in the horizontal flat die, the hole diameter was set to 3.8 mm, the number of holes was set to, similarly, 10, and the land length was set to 10 mm. The temperature of the strand in the center of the die was 309°C. It was considered that the temperature of the resin was low, impregnation of the fiber was insufficient, poor spreading occurred, and strand breaks occurred frequently.

### Comparative Example 12

Example 15 was performed in the same manner except that the screw rotation was set to 500 rpm. The temperature of the strand in the center of the die was 369°C. Strands broke similarly not only inside but also at both ends of the die. The strand surfaces were beautiful, and no poor glass spreading was shown. Strand breaks occurred at the outlet of the die and were thus considered as breaks due to a gas.

The above-described results are shown in Table 4 below.

**[Table 4]**

| | | Example | | | | | | | Comp. Example | | | |
|---|---|---|---|---|---|---|---|---|---|---|---|---|
| | | 15 | 16 | 17 | 18 | 19 | 20 | 21 | 9 | 10 | 11 | 12 |
| Formulation | | 3 | 3 | 3 | 3 | 3 | 3 | 3 | 3 | 3 | 3 | 3 |
| Discharge amount | kg/h | 250 | 250 | 250 | 250 | 250 | 250 | 250 | 250 | 250 | 250 | 250 |
| Screw rotation speed | rpm | 300 | 300 | 300 | 300 | 300 | 300 | 300 | 300 | 300 | 200 | 500 |
| Die land length | mm | 20 | 10 | 30 | 20 | 20 | 20 | 20 | 20 | 20 | 10 | 20 |
| Resin pressure | MPa | 5.1 | 3.0 | 7.5 | 5.2 | 4.9 | 5.6 | 4.6 | 5.5 | 4.4 | 4.7 | 3.7 |
| Die holder temperature | °C | 310 | 310 | 310 | 285 | 335 | 260 | 345 | 240 | 360 | 310 | 310 |
| Stand temperature in die center | °C | 347 | 341 | 351 | 346 | 352 | 344 | 354 | 340 | 360 | 309 | 369 |
| Stand temperature at both end of die | °C | 340 | 333 | 345 | 337 | 346 | 332 | 349 | 323 | 359 | 304 | 359 |
| Temperature difference between center and both ends ( ΔT) | °C | 7 | 8 | 6 | 9 | 6 | 12 | 5 | 17 | 1 | 5 | 10 |
| Number of stand breaks inside (/hr) | Breaks | 0 | 1 | 2 | 0 | 1 | 0 | 4 | 0 | 12 | 11 | 14 |
| Number of stand breaks at both ends (/hr) | Breaks | 0 | 0 | 0 | 3 | 1 | 5 | 1 | 15 | 5 | 4 | 7 |
| Number of all strand breaks (/hr) | Breaks | 0 | 1 | 2 | 3 | 2 | 5 | 5 | 15 | 17 | 15 | 21 |
| Stand break evaluation | | A | B | B | C | B | C | C | E | E | E | E |
| Number of long pellets (/kg) | Pellets | 0 | 0 | 0 | 1 | 0 | 2 | 1 | 5 | 4 | 6 | 6 |
| Shear viscosity | Pa·s | 1110 | 1140 | 1100 | 1140 | 1100 | 1160 | 1050 | 1180 | 1130 | 1240 | 940 |

[(ii) Examples and comparative examples of the invention in which a strand is extruded so that the resin pressure in the die when the strand is extruded from the die reaches 2.0 to 8.5 MPa]

Raw material components used and blending proportions thereof (formulation) are as described in Table 5 below.

**[Table 5]**

| Component | Abbr. | | Form. 1 (mass%) | Form. 2 (mass%) | Form. 3 (mass%) |
|---|---|---|---|---|---|
| (A) Polyamide resin | PA1 | Nylon MXD6 | 35 | 29 | 5 |
| | | "MX NYLON #6000" by Mitsubishi Gas Chemical Co. | | | |
| | PA2 | Nylon 66 | 4 | 5 | 3 |
| | | "U4800" by INVISTA | | | |
| | PA3 | Nylon 6 | | 10 | 23 |
| | | "UBE NYLON 1022B" by Ube Industries. | | | |
| (B) Glass fiber | GF1 | Circular cross section glass fibers | 40 | 20 | 8 |
| | | "ECS 03 T-275H: by Nippon Electric Glass Co. diameter: 10 µm, aspect ratio: approximately 1.0, average length: 3 mm | | | |
| | GF2 | Irregular cross section glass fibers | 20 | 20 | 20 |
| | | irregular cross section glass chopped strands "CGS 3PA0810" by Nitto Boseki Co., aspect ratio: 4, average length: 3 mm | | | |
| (C) Other reinforcement material | C1 | Mica | | 15 | 25 |
| | | "Suzₗorite 325-HK" by Tomoe Engineering Co. | | | |
| | C2 | Titanium oxide | 1 | | |
| | | "MICRON WHITE 5000S" by Hayashi Kasei Co. | | | |
| (D) Other polymer or additive | D1 | Elastomer | | | 15 |
| | | "TAFMER MP0610" by Mitsui Chemicals, Inc. | | | |
| | D2 | Mold-release agent, barium stearate | | 1 | 1 |
| | | "SB" by Sakai Chemical Industry Co. | | | |

In the following examples and comparative examples, as an extruder, an intermeshing co-rotating vented twin screw extruder ("TEX44αIII" manufactured by The Japan Steel Works, Ltd., cylinder diameter D = 47 mm) was used.

The screw configuration is shown in Fig. 6.

A cylinder position C1 was a feed cylinder, C7 and C12 were vent cylinders, C7 was an open vent, C12 was a vacuum vent, and C9 was a side feed cylinder. A first kneading portion where a polyamide resin (A) and another polymer (D) were melt-kneaded was disposed from C5 through C6, and as the screw configuration thereof, R R N N L, each of which had five paddles and was 1Ds long (1Ds = 44 mm), were provided. Glass fiber (B) were side-fed from C9. In a second kneading portion where the glass fiber (B) were kneaded, R having five paddles and a length of 1Ds and three back mixing screws, which were each, similarly, 1Ds long, (lead 0.25Ds) were disposed as shown in Fig. 6.

A kneading portion where the polyamide resin (A) and the other polymer or additive (D) were added and the glass fiber (B) were fed is the first kneading portion, and C1 to C9 is a first step. Another reinforcement material (C) than glass fiber were also fed to a feed cylinder C1 like the polyamide resin (A) and the other polymer (D).

Next, a kneading portion where the glass fiber (B) were fed into the extruder and the vacuum vent was provided is a second kneading portion, and C10 to C11 is a second step. C12 to C14 where a die holder was included and a kneaded resin composition was extruded from a die is a third step. Furthermore, a step of cooling a strand extruded from the die with water and cutting the strand with a pelletizer to obtain pellets is a fourth step.

In Examples 22 to 28 and Comparative Examples 13 to 16 to be described below, resin compositions were produced in raw material proportions shown by a formulation 1 in Table 5.

### Example 22

87.5 kg/h of nylon MXD6 (PA1), 10 kg/h or nylon 66 (PA2), and 2.5 kg/h of titanium oxide (C2), which was another reinforcement material, were fed from a main raw material hopper to a feed barrel C1 of the twin screw extruder (TEX44αIII" manufactured by The Japan Steel Works, Ltd.), and 100 kg/h of circular cross section glass fiber (GF1) and 50 kg/h of irregular cross section glass fiber (GF2) were further fed from a side feed hopper to a side feed cylinder C9. The amount of the raw materials fed was set to 250 kg/h in total, and the screw rotation speed was set to 300 rpm.

The set temperatures of the cylinders C2 to C9 and the cylinders C12 to C14 were set to 270°C. The cylinder set temperatures of C10 and C11 in the second kneading portion were set to 220°C. The set temperature of the die holder, which was present in the third step, was set to 310°C. The temperature of a flange was also set to 310°C. In addition, as a horizontal flat die, a die in which the hole diameter of a die hole was 3.8 mm, a land length was 20 mm, and the number of die holes was 10 was used. The resin pressure of the die holder at this time was 4.5 MPa. The average temperature of two strands in the center of the die was 342°C. The average temperature of strands at both ends of the die was 335°C. In all of the examples and the comparative examples, the temperatures of the flanges were set to the same as the temperature of the die holder.

The haul-off rate of the pelletizer was set to 40 m/minute. Extrusion was continued for one hour under this condition. All of the 10 strands were stable and did not break even a single time. Some of the strands at both ends of the die looked as if the strands slightly curled outward, but did not break.

Strands extruded from the die were cooled in a water tank, the strands were cut with the pelletizer, and pellets having an average length of 3 mm were obtained.

The obtained pellets were dried at 120°C for five hours, and the shear viscosity at a temperature of 280°C and a shear rate of 91 /sec was obtained using "Capilograph 1D2" manufactured by Toyo Seiki Seisaku-sho, Ltd. and an orifice having a capillary diameter of 1 mm and a capillary length of 3 mm. The shear viscosity was 1020 Pa·s.

One kilogram of the produced pellets were visually confirmed, and the number of long pellets (pellets having a length of 6 mm or longer) were counted. The result was shown in Table 6.

Strand break evaluation was determined by the following standards.
A: The number of times of strand breaks is 0 /hour
B: The number of times of strand breaks is 1 to 2 /hour
C: The number of times of strand breaks is 3 to 5 /hour
D: The number of times of strand breaks is 6 to 9 /hour
E: The number of times of strand breaks is 10 /hour or more

The results are shown in Table 6.

### Example 23

Example 22 was performed in the same manner except that the hole diameter was set to 3.8 mm, the number of holes was set to, similarly, 10, and the land length was set to 10 mm in the horizontal flat die.

### Example 24

Example 22 was performed in the same manner except that the hole diameter was set to 3.8 mm, the number of holes was set to, similarly, 10, and the land length was set to 30 mm in the horizontal flat die.

### Example 25

Example 22 was performed in the same manner except that the temperature of the die holder was set to 285°C.

### Example 26

Example 22 was performed in the same manner except that the temperature of the die holder was set to 330°C.

### Example 27

Example 22 was performed in the same manner except that the temperature of the die holder was set to 260°C.

### Example 28

Example 22 was performed in the same manner except that the temperature of the die holder was set to 345°C.

### Comparative Example 13

Example 22 was performed in the same manner except that the hole diameter was set to 3.8 mm, the number of holes was set to, similarly, 10, and the land length was set to 5 mm in the horizontal flat die. The resin pressure in the die was 1.6 MPa. Strands both inside the die and at both ends of the die were likely to break, and fibrous fluff was shown even in strands. It was determined that the resin pressure was low, impregnation of the fiber with the resin was insufficient, and the spreading-ability of the fiber was insufficient.

### Comparative Example 14

Example 22 was performed in the same manner except that the hole diameter was set to 3.8 mm, the number of holes was set to, similarly, 10, and the land length was set to 40 mm in the horizontal flat die. The resin pressure in the die was as high as 9.1 MPa, strands both inside the die and at both ends of the die were likely to break, and strand breaks were considered to result from a gas due to the fact that the position where the strands broke was the outlet of the die.

### Comparative Example 15

Example 22 was performed in the same manner except that the screw rotation was set to 200 rpm, and in the horizontal flat die, the hole diameter was set to 3.8 mm, the number of holes was set to, similarly, 10, and the land length was set to 10 mm. The temperature of the strand in the center of the die was 306°C. It was considered that the temperature of the resin was low, impregnation of the fiber was insufficient, poor spreading occurred, and strand breaks occurred frequently.

### Comparative Example 16

Example 22 was performed in the same manner except that the screw rotation was set to 500 rpm. The temperature of the strand in the center of the die was 363°C. Strands broke similarly not only inside but also at both ends of the die. The strand surfaces were beautiful, and no poor glass spreading was shown. Strand breaks occurred at the outlet of the die and were thus considered as breaks due to a gas.

The above-described results are shown in Table 6 below.

**[Table 6]**

| | | Example | | | | | | | Comp. Example | | | |
|---|---|---|---|---|---|---|---|---|---|---|---|---|
| | | 22 | 23 | 24 | 25 | 26 | 27 | 28 | 13 | 14 | 15 | 16 |
| Formulation | | 1 | 1 | 1 | 1 | 1 | 1 | 1 | 1 | 1 | 1 | 1 |
| Discharge amount | kg/h | 250 | 250 | 250 | 250 | 250 | 250 | 250 | 250 | 250 | 250 | 250 |
| Screw rotation speed | rpm | 300 | 300 | 300 | 300 | 300 | 300 | 300 | 300 | 300 | 200 | 500 |
| Die land length | mm | 20 | 10 | 30 | 20 | 20 | 20 | 20 | 5 | 40 | 10 | 20 |
| Resin pressure | MPa | 4.5 | 2.5 | 7.2 | 4.6 | 4.4 | 5.0 | 4.1 | 1.6 | 9.1 | 4.0 | 3.1 |
| Die holder temperature | °C | 310 | 310 | 310 | 285 | 330 | 260 | 345 | 310 | 310 | 310 | 310 |
| Strand temperature in die center | °C | 342 | 337 | 345 | 340 | 344 | 338 | 346 | 335 | 350 | 306 | 363 |
| Strand temperature at both end of die | °C | 335 | 331 | 339 | 332 | 339 | 327 | 342 | 329 | 342 | 301 | 354 |
| Temperature difference between center and both ends ( ΔT) | °C | 7 | 6 | 6 | 8 | 5 | 11 | 4 | 6 | 8 | 5 | 9 |
| Number of strand breaks inside (/hr) | Breaks | 1 | 3 | 5 | 0 | 4 | 0 | 5 | 11 | 8 | 12 | 21 |
| Number of strand breaks at both ends (/hr) | Breaks | 0 | 0 | 0 | 3 | 1 | 4 | 1 | 5 | 4 | 6 | 8 |
| Number of all strand breaks (/hr) | Breaks | 1 | 3 | 5 | 3 | 5 | 4 | 6 | 16 | 12 | 18 | 29 |
| Strand break evaluation | | A | C | C | C | C | C | D | E | E | E | E |
| Number of long pellets (/kg) | Pellets | 0 | 0 | 0 | 1 | 0 | 1 | 1 | 3 | 4 | 5 | 7 |
| Shear viscosity | Pa▪s | 1020 | 1030 | 1010 | 1050 | 990 | 1060 | 960 | 1070 | 960 | 1090 | 870 |

In Examples 29 to 35 and Comparative Examples 17 to 20, resin compositions were produced in raw material proportions shown by a formulation 2 in Table 5.

### Example 29

An experiment was performed in the same manner as in Example 22 except that 72.5 kg/h of nylon MXD6 (PA1), 12.5 kg/h or nylon 66 (PA2), 25 kg/h of nylon 6 (PA3). 37.5 kg/h of mica (C1), which was another reinforcement material, and 2.5 kg/h of the mold-release agent (D2) were fed from the main raw material hopper to the feed barrel C1 of the twin screw extruder (TEX44αIII" manufactured by The Japan Steel Works, Ltd.), and 50 kg/h of circular cross section glass fiber (GF1) and 50 kg/h of irregular cross section glass fiber (GF2) were further fed from the side feed hopper to the side feed cylinder C9.

Some of the strands at both ends looked as if the strands slightly curled outward, but did not break.

Strands extruded from the die were cooled in the water tank, and the strands were cut with the pelletizer, thereby obtaining pellets. The shear viscosity of the pellets measured in the same manner as in Example 22 was 980 Pa·s.

### Example 30

Example 29 was performed in the same manner except that the hole diameter was set to 3.8 mm, the number of holes was set to, similarly, 10, and the land length was set to 10 mm in the horizontal flat die.

### Example 31

Example 29 was performed in the same manner except that the hole diameter was set to 3.8 mm, the number of holes was set to, similarly, 10, and the land length was set to 30 mm in the horizontal flat die.

### Example 32

Example 29 was performed in the same manner except that the temperature of the die holder was set to 285°C.

### Example 33

Example 29 was performed in the same manner except that the temperature of the die holder was set to 330°C.

### Example 34

Example 29 was performed in the same manner except that the temperature of the die holder was set to 260°C.

### Example 35

Example 29 was performed in the same manner except that the temperature of the die holder was set to 345°C.

### Comparative Example 17

Example 29 was performed in the same manner except that the hole diameter was set to 3.8 mm, the number of holes was set to, similarly, 10, and the land length was set to 5 mm in the horizontal flat die. The resin pressure in the die was 1.5 MPa. Strands both inside the die and at both ends of the die were likely to break, and fibrous fluff was shown even in strands. It was determined that the resin pressure was low, impregnation of the fiber with the resin was insufficient, and the spreading-ability of the fiber was insufficient.

### Comparative Example 18

Example 29 was performed in the same manner except that the hole diameter was set to 3.8 mm, the number of holes was set to, similarly, 10, and the land length was set to 40 mm in the horizontal flat die. The resin pressure in the die was as high as 8.6 MPa, strands both inside the die and at both ends of the die were likely to break, and strand breaks were considered to result from a gas due to the fact that the position where the strands broke was the outlet of the die.

### Comparative Example 19

Example 29 was performed in the same manner except that the screw rotation was set to 200 rpm, and in the horizontal flat die, the hole diameter was set to 3.8 mm, the number of holes was set to, similarly, 10, and the land length was set to 10 mm. The temperature of the strand in the center of the die was 303°C. It was considered that the temperature of the resin was low, impregnation of the fiber was insufficient, poor spreading occurred, and strand breaks occurred frequently.

### Comparative Example 20

Example 29 was performed in the same manner except that the screw rotation was set to 500 rpm. The temperature of the strand in the center of the die was 362°C. Strands broke similarly not only inside but also at both ends of the die. The strand surfaces were beautiful, and no poor glass spreading was shown. Strand breaks occurred at the outlet of the die and were thus considered as breaks due to a gas.

The above-described results are shown in Table 7 below.

**[Table 7]**

| | | Example | | | | | | | Comp. Example | | | |
|---|---|---|---|---|---|---|---|---|---|---|---|---|
| | | 29 | 30 | 31 | 32 | 33 | 34 | 35 | 17 | 18 | 19 | 20 |
| Formulation | | 2 | 2 | 2 | 2 | 2 | 2 | 2 | 2 | 2 | 2 | 2 |
| Discharge amount | kg/h | 250 | 250 | 250 | 250 | 250 | 250 | 250 | 250 | 250 | 250 | 250 |
| Screw rotation speed | rpm | 300 | 300 | 300 | 300 | 300 | 300 | 300 | 300 | 300 | 200 | 500 |
| Die land length | mm | 20 | 10 | 30 | 20 | 20 | 20 | 20 | 5 | 40 | 10 | 20 |
| Resin pressure | MPa | 4.2 | 2.4 | 7.0 | 4.4 | 4.1 | 4.7 | 3.9 | 1.5 | 8.6 | 3.8 | 3.0 |
| Die holder temperature | °C | 310 | 310 | 310 | 285 | 330 | 260 | 345 | 310 | 310 | 310 | 310 |
| Strand temperature in die center | °C | 339 | 332 | 343 | 336 | 341 | 335 | 343 | 330 | 347 | 303 | 362 |
| Strand temperature at both end of die | °C | 333 | 326 | 336 | 327 | 336 | 324 | 339 | 325 | 339 | 298 | 354 |
| Temperature difference between center and both ends ( ΔT) | °C | 6 | 6 | 7 | 9 | 5 | 11 | 4 | 5 | 8 | 5 | 8 |
| Number of strand breaks inside (/hr) | Breaks | 0 | 4 | 3 | 0 | 5 | 0 | 4 | 13 | 9 | 15 | 16 |
| Number of strand breaks at both ends (/hr) | Breaks | 0 | 0 | 0 | 4 | 0 | 5 | 3 | 3 | 5 | 5 | 7 |
| Number of all strand breaks (/hr) | Breaks | 0 | 4 | 3 | 4 | 5 | 5 | 7 | 16 | 14 | 20 | 23 |
| Strand break evaluation | | A | C | C | C | C | C | D | E | E | E | E |
| Number of long pellets (/kg) | Pellets | 0 | 0 | 0 | 0 | 1 | 0 | 2 | 4 | 3 | 6 | 6 |
| Shear viscosity | Pa▪s | 980 | 1000 | 970 | 990 | 940 | 1020 | 900 | 1010 | 920 | 1050 | 840 |

In Examples 36 to 42 and Comparative Examples 21 to 24, resin compositions were produced in raw material proportions shown by a formulation 3 in Table 5.

### Example 36

An experiment was performed in the same manner as in Example 22 except that 12.5 kg/h of nylon MXD6 (PA1), 7.5 kg/h or nylon 66 (PA2), 57.5 kg/h of nylon 6 (PA3), 62.5 kg/h of mica (C1), which was another reinforcement material, and 2.5 kg/h of the mold-release agent (D2) were fed from the main raw material hopper to the feed barrel C1 of the twin screw extruder (TEX44αIII" manufactured by The Japan Steel Works, Ltd.), and 20 kg/h of circular cross section glass fiber (GF1) and 50 kg/h of irregular cross section glass fiber (GF2) were further fed from the side feed hopper to the side feed cylinder C9.

Some of the strands at both ends looked as if the strands slightly curled outward, but did not break. The inside strands broke only twice.

Strands extruded from the die were cooled in the water tank, and the strands were cut with the pelletizer, thereby obtaining pellets. The shear viscosity of the pellets measured in the same manner as in Example 22 was 1050 Pa·s.

### Example 37

Example 36 was performed in the same manner except that the hole diameter was set to 3.8 mm, the number of holes was set to, similarly, 10, and the land length was set to 10 mm in the horizontal flat die.

### Example 38

Example 36 was performed in the same manner except that the hole diameter was set to 3.8 mm, the number of holes was set to, similarly, 10, and the land length was set to 30 mm in the horizontal flat die.

### Example 39

Example 36 was performed in the same manner except that the temperature of the die holder was set to 285°C.

### Example 40

Example 36 was performed in the same manner except that the temperature of the die holder was set to 330°C.

### Example 41

Example 36 was performed in the same manner except that the temperature of the die holder was set to 260°C.

### Example 42

Example 36 was performed in the same manner except that the temperature of the die holder was set to 345°C.

### Comparative Example 21

Example 36 was performed in the same manner except that the hole diameter was set to 3.8 mm, the number of holes was set to, similarly, 10, and the land length was set to 5 mm in the horizontal flat die. The resin pressure in the die was 1.8 MPa. Strands both inside the die and at both ends of the die were likely to break, and fibrous fluff was shown even in strands. It was determined that the resin pressure was low, impregnation of the fiber with the resin was insufficient, and the spreading-ability of the fiber was insufficient.

### Comparative Example 22

Example 36 was performed in the same manner except that the hole diameter was set to 3.8 mm, the number of holes was set to, similarly, 10, and the land length was set to 40 mm in the horizontal flat die. The resin pressure in the die was as high as 9.6 MPa, strands both inside the die and at both ends of the die were likely to break, and strand breaks were considered to result from a gas due to the fact that the position where the strands broke was the outlet of the die.

### Comparative Example 23

Example 36 was performed in the same manner except that the screw rotation was set to 200 rpm, and in the horizontal flat die, the hole diameter was set to 3.8 mm, the number of holes was set to, similarly, 10, and the land length was set to 10 mm. The temperature of the strand in the center of the die was 308°C. It was considered that the temperature of the resin was low, impregnation of the fiber was insufficient, poor spreading occurred, and strand breaks occurred frequently.

### Comparative Example 24

Example 36 was performed in the same manner except that the screw rotation was set to 500 rpm. The temperature of the strand in the center of the die was 367°C. Strands broke similarly not only inside but also at both ends of the die. The strand surfaces were beautiful, and no poor glass spreading was shown. Strand breaks occurred at the outlet of the die and were thus considered as breaks due to a gas.

The above-described results are shown in Table 8 below.

**[Table 8]**

| | | Example | | | | | | | Comp. Example | | | |
|---|---|---|---|---|---|---|---|---|---|---|---|---|
| | | 36 | 37 | 38 | 39 | 40 | 41 | 42 | 21 | 22 | 23 | 24 |
| Formulation | | 3 | 3 | 3 | 3 | 3 | 3 | 3 | 3 | 3 | 3 | 3 |
| Discharge amount | kg/h | 250 | 250 | 250 | 250 | 250 | 250 | 250 | 250 | 250 | 250 | 250 |
| Screw rotation speed | rpm | 300 | 300 | 300 | 300 | 300 | 300 | 300 | 300 | 300 | 200 | 500 |
| Die land length | mm | 20 | 10 | 30 | 20 | 20 | 20 | 20 | 5 | 40 | 10 | 20 |
| Resin pressure | MPa | 4.8 | 2.7 | 7.6 | 5.0 | 4.8 | 5.3 | 4.5 | 1.8 | 9.6 | 4.3 | 3.2 |
| Die holder temperature | °C | 310 | 310 | 310 | 285 | 330 | 260 | 345 | 310 | 310 | 310 | 310 |
| Stand temperature in die center | °C | 345 | 341 | 349 | 347 | 347 | 341 | 350 | 339 | 352 | 308 | 367 |
| Stand temperature at both end of die | °C | 339 | 336 | 344 | 340 | 342 | 331 | 346 | 334 | 345 | 304 | 359 |
| Temperature difference between center and both ends ( ΔT) | °C | 6 | 5 | 5 | 7 | 5 | 10 | 4 | 5 | 7 | 4 | 8 |
| Number of strand breaks inside (/hr) | Breaks | 2 | 4 | 4 | 1 | 4 | 0 | 4 | 9 | 11 | 15 | 17 |
| Number of strand breaks at both ends (/hr) | Breaks | 0 | 0 | 0 | 4 | 1 | 5 | 3 | 6 | 3 | 8 | 7 |
| Number of all strand breaks (/hr) | Breaks | 2 | 4 | 4 | 5 | 5 | 5 | 7 | 15 | 14 | 23 | 24 |
| Stand break evaluation | | ○ | ○⁻ | ○⁻ | ○⁻ | ○⁻ | ○⁻ | △ | × | × | × | × |
| Number of long pellets (/kg) | Pellets | 0 | 0 | 0 | 0 | 0 | 0 | 1 | 4 | 3 | 4 | 6 |
| Shear viscosity | Pa▪s | 1050 | 1090 | 1040 | 1110 | 1030 | 1120 | 1000 | 1130 | 1010 | 1160 | 930 |

### Industrial Applicability

According to the production method of the present invention, it is possible to stably produce high-quality pellets of a glass fiber-reinforced polyamide resin composition containing glass fiber at a high concentration.

### Reference Signs List

- 1: Main raw material hopper
- 3: Side feed hopper
- 4: Vacuum vent
- 5: Second kneading portion thermocouple
- 6: Flange
- 7: Resin pressure gauge
- 8: Die holder
- 9: Die holder thermocouple
- 10: Strand
- 11: Pelletizer
- 12: Pellet
- 13: Cooling water tank
- 15: Gear box
- 16: Motor
- 20: Cylinder front end portion
- 21: Screw
- 23: Ring plate
- 24: Manifold portion
- 25: Horizontal flat die
- 31, 32, 33: Die hole

## Claims

1. A production method for a glass fiber-reinforced polyamide resin composition comprising 20 to 70 mass% of a polyamide resin (A), 10 to 75 mass% of a glass fiber (B), 0 to 40 mass% of another reinforcement material (C), and 0 to 30 mass% of another polymer or additive (D) (the total of each components is 100 mass%), by using a twin screw extruder, wher ein
a shear viscosity of the glass fiber-reinforced polyamide resin composition at a temperature of 280°C and a shear rate of 91 /sec is 400 to 2000 Pa·s,
when a strand is extruded from a horizontal flat die provided in a die holder at a front end of the twin screw extruder, a temperature of the strand from a die hole in a center of the flat die is 310°C to 360°C, and
(i) a temperature of the strand from a die hole at an end of the flat die is 4°C to 14°C lower than the temperature of the strand from the die hole in the center of the flat die, or
(ii) the strand is extruded such that a resin pressure in the die when the strand is extruded from the flat die is 2.0 to 8.5 MPa.

2. The production method of Claim 1,
wherein (i) the temperature of the strand from the die hole at the end of the flat die is 4°C to 14°C lower than the temperature of the strand from the die hole in the center of the flat die, and (ii) the strand is extruded such that the resin pressure in the die when the strand is extruded from the flat die is 2.0 to 8.5 MPa.

3. The production method of Claim 1 or 2,
wherein a temperature of the die holder is 250°C to 350°C.

4. The production method of any one of Claims 1 to 3,
wherein the polyamide resin (A) comprises one to three amo ng poly-m-xylyleneadipamide, polyamide 6, and polyamide 66.

5. The production method of any one of Claims 1 to 4, wherein a total of contents of the glass fiber (B) and the other reinforcement material (C) is 30 mass% or more.

6. The production method of any one of Claims 1 to 5,
wherein the glass fiber (B) comprises glass fiber having a n aspect ratio of a longitudinal cross section within a range of 2.0 to 6.0.
